(19) Europäisches Patentamt
European Patent Office
Office européen des brevets

(11) **EP 4 339 571 B1**

(12) **EUROPEAN PATENT SPECIFICATION**

(45) Date of publication and mention
of the grant of the patent:
**25.03.2026 Bulletin 2026/13**

(21) Application number: **22196164.2**

(22) Date of filing: **16.09.2022**

(51) International Patent Classification (IPC):
**G01K 7/42** *(2006.01)* **G01K 13/02** *(2021.01)*

(52) Cooperative Patent Classification (CPC):
**G01K 7/427; G01K 13/02;** G01K 2201/02;
G01K 2217/00

(54) **METHOD FOR DETERMINING AN OUTPUT TEMPERATURE OF A FLUID**

VERFAHREN ZUR BESTIMMUNG EINER AUSGABETEMPERATUR EINES FLUIDS

PROCÉDÉ DE DÉTERMINATION D'UNE TEMPÉRATURE DE SORTIE D'UN FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2024 Bulletin 2024/12**

(73) Proprietor: **MAHLE International GmbH
70376 Stuttgart (DE)**

(72) Inventors:
• **DAUDON, Guillaume
88470 La Bourgonce (FR)**

• **HENKE, Timo
71394 Kernen/Rommelshausen (DE)**
• **LEFEVRE, Florian
68280 Andolsheim (FR)**
• **WALTER, Jean-Francois
68230 Turckheim (FR)**

(74) Representative: **BRP Renaud & Partner mbB
Rechtsanwälte Patentanwälte
Steuerberater
Königstraße 28
70173 Stuttgart (DE)**

(56) References cited:
**EP-A1- 3 672 360 US-A1- 2011 038 394**

**Description**

The invention relates to a method for determining an output temperature of a fluid after flowing through a PTC heater heating the fluid with a PTC heating element according to the generic term of claim 1. The invention also relates to the PTC heater comprising the PTC heating element for carrying out the method.

A PTC heater (PTC: Positive Temperature Coefficient) comprises at least one PTC heating element made of PTC ceramic and two electrical contacts. The PTC heater can be used to heat a fluid - for example air - in a vehicle air conditioning system. To generate the electrical heating power, a supply voltage is applied to the PTC heating element via the electrical contacts, thereby generating a current in the PTC heating element. By adjusting the supply voltage - for example by means of pulse width modulation - the electrical heating power of the PTC heating element and correspondingly of the PTC heater can be regulated. The electrical heating power is thereby adjusted depending on the required output temperature of the fluid. For this purpose, the output temperature of the fluid has to be determined and is usually measured by means of temperature sensors. Disadvantageously, it can be complex and cost-intensive.

EP 3 672 360 A1 describes a method for controlling the PTC heater depending on the current temperature of the PTC heating element. Here, in particular, overheating of the PTC heater should be prevented. In EP'360 a control unit determines the outlet temperature of the fluid by means of the electrical resistance of the PTC heater.

US 2011/038394 A discloses an internal combustion engine includes an exhaust gas feedstream flowing past a gas sensing device disposed therein. The gas sensor includes an integrated electrical heating element which provides a resistance indicative of its temperature. An unknown input observer is used to determine the exhaust gas feedstream temperature based on the heating element temperature.

It is therefore the task of the invention to provide an improved or at least alternative embodiment for a method for determining an output temperature of a fluid, in which the described disadvantages are overcome. It is also the task of the invention to provide a corresponding PTC heater for carrying out the method.

This task is solved according to the invention by the object of independent claims. Advantageous embodiments are the subject of the dependent claims.

The present invention is based on the general idea of determining the output temperature of a fluid without any temperature measurements. In particular, the output temperature is to be determined only by means of the information available in the control unit, such as supply voltage, current, duty cycle of the supply voltage and predetermined constant quantities.

The method according to the invention is designed or provided for determining an output temperature of a fluid after flowing through a PTC heater heating the fluid. The PTC heater contains at least one PTC heating element. In the method, a current of the PTC heater, a supply voltage of the PTC heater, and a duty cycle of the supply voltage are determined. Then, the output temperature of the fluid is calculated based on the current, the supply voltage, and the duty cycle of the supply voltage.

The current and the supply voltage can be measured at the PTC heating element. The supply voltage is a constant DC voltage which is pulse width modulated with the duty cycle. The duty cycle of the supply voltage is specified by a control unit and can be read out from the control unit. The control unit can be a component of the PTC heater. The PTC heating element is contacted in the PTC heater in such a way that the supply voltage can be applied to the PTC heating element. The PTC heating element is formed from a PTC ceramic and is a PTC thermistor. The electrical resistance of the PTC heating element depends on its temperature and vice versa. The PTC heating element thus exhibits a temperature-dependent electrical resistance and can be characterized via a temperature-resistance-characteristic curve. The PTC heater can also have several PTC heating elements.

In the method, the output temperature of the fluid is calculated based on the current, the supply voltage and the duty cycle of the supply voltage. In particular, the output temperature of the fluid can be calculated independently of an input temperature of the fluid prevailing at the input of the PTC heater i.e. before flowing through a PTC heater. The output temperature of the fluid can be calculated without a measurement of temperatures prevailing in the PTC heater and/or in the fluid. The output temperature of the fluid can be calculated exclusively based on the supply voltage, the duty cycle of the supply voltage, and current with the addition of a predetermined characterization constant of the PTC heater. The characterization constant of the PTC heater is constant and can be determined i.e. calculated in preliminary tests.

The output temperature of the fluid can be calculated exclusively from an electrical heating power of the PTC heating element, a temperature prevailing at the PTC heating element and a characterization constant of the PTC heater. Here, the output temperature $T_{OUT}$ of the fluid can be calculated as a difference of a temperature $T_{CERAMIC}$ prevailing at the PTC heating element and a double quotient of the electrical heating power $P_{EL}$ of the PTC heater by the characterization constant $K \cdot S$ of the PTC heater. In other words, the following equation applies:

$$T_{OUT} = T_{CERAMIC} - 2\frac{P_{EL}}{K \cdot S}.$$

The characterization constant K·S is constant and is a product of an area S and a factor K. The area S indicates the heat transferring surface of the PTC heater which is flowed around by the fluid and the factor K indicates an electrical heating power per surface per Kelvin transmitted by the PTC heating element to the fluid. Thus, the area S is given in $m^2$ and the factor K in $W/Km^2$. The characterization constant K·S is thus given in W/K. The electrical heating power $P_{EL}$ is given in W and temperatures in °C.

The following reasoning is used to derive the equation given above. In the PTC heater, a thermal power Q is transferred from the PTC heater to the fluid. In the steady state of the PTC heater, the thermal power Q is identical to the electrical heating power $P_{EL}$ of the PTC heater. In other words, in the steady state of the PTC heater, the generated electrical heating power $P_{EL}$ of the PTC heater is completely transferred as the thermal power Q to the fluid. For the thermal power Q and also for the electrical heating power $P_{EL}$, the following equation applies in general:

$$Q = P_{EL} = K \cdot S \cdot \Delta T.$$

The fluid has an inlet temperature $T_{IN}$ when it flows into the PTC heater and an outlet temperature $T_{OUT}$ when it flows out of the PTC heater. Assuming that the PTC heating element changes its temperature during the applying of the electrical heating power $P_{EL}$, the PTC heating element has a temperature $T_{IN,PTC}$ before the electrical heating power $P_{EL}$ is applied and a temperature $T_{OUT,PTC}$ after the electrical heating power $P_{EL}$ is applied. The following equation applies then for the temperature gradient $\Delta T$:

$$\Delta T = \frac{T_{IN,PTC} + T_{OUT,PTC}}{2} - \frac{T_{IN} + T_{OUT}}{2}.$$

In the steady state of the PTC heater, it can be assumed that the temperature $T_{IN,PTC}$ of the PTC heating element is identical to the input temperature $T_{IN}$ of the fluid and the temperature $T_{OUT,PTC}$ is identical to the temperature $T_{CERAMIC}$ prevailing at the PTC heating element. Then the temperature gradient $\Delta T$ can be simplified as follows:

$$\Delta T = \frac{T_{IN} + T_{CERAMIC}}{2} - \frac{T_{IN} + T_{OUT}}{2} = \frac{T_{CERAMIC} - T_{OUT}}{2}.$$

The thermal power Q or the electrical heating power $P_{EL}$ are then given by the following equation:

$$Q = P_{EL} = K \cdot S \cdot \frac{T_{CERAMIC} - T_{OUT}}{2}.$$

This equation leads to the equation already given above for the output temperature $T_{OUT}$ of the fluid:

$$T_{OUT} = T_{CERAMIC} - 2\frac{P_{EL}}{K \cdot S}.$$

The electrical heating power $P_{EL}$ of the PTC heater can thereby be calculated as a product of the supply voltage U, the duty cycle PWM of the supply voltage U and the current I. In other words, the following equation applies:

$$P_{EL} = U \cdot I \cdot PWM.$$

As described above, the current I and the supply voltage U can be measured at the PTC heater i.e. the PTC heating element and the duty cycle PWM of the supply voltage U can be read out from a control unit. The duty cycle PWM can vary between 0% and 100%. The supply voltage is applied to the PTC heating element 100% of the time when PWM=100% and 0% of the time when PWM=0%. Accordingly, the PTC heater generates the maximum heating power of 100% when PWM=100% and the minimum heating power of 0% i.e. zero when PWM=0%. The supply voltage U is specified in V and the current I in A. The electrical heating power $P_{EL}$ is specified in W.

As explained above, the characterization constant K·S of the PTC heater can be given as a product of the area S and the factor K. Here, the area S is the surface of the PTC heater that is flowed around by the fluid and is contacted to the fluid in a heat-transferring manner. In other words, the area S is the surface of the PTC heater by means of which the PTC heater can transfer heat to the fluid. The factor K indicates the electrical heating power per surface per Kelvin transmitted i.e. given up by the PTC heater to the fluid. The area S and the factor K are constant and consequently the characterization constant K·S is constant. The area S and the factor K depend on the geometry of the PTC heater and may differ for different PTC heaters. The area S and the factor K can be determined i.e. calculated by preliminary tests on the respective PTC heater.

The temperature $T_{CERAMIC}$ of the PTC heating element i.e. prevailing at the PTC heating element can be determined or calculated in different ways. In the first alternative, an electrical resistance $R_{CERAMIC}$ of the PTC heating element can be calculated from the supply voltage U and the current I. The following equation applies:

$$R_{CERAMIC} = \frac{U}{I}.$$

The electrical resistance $R_{CERAMIC}$ is thus specified in $\Omega$. Then, the temperature $T_{CERAMIC}$ of the PTC heating element i.e. prevailing at the PTC heating element can be read out from a predetermined matrix or table depending on i.e. as a function of the supply voltage U and the electrical resistance $R_{CERAMIC}$ of the PTC heating element.

The temperature $T_{CERAMIC}$ can be read out from a predetermined matrix or table. The matrix may contain the variables associated with each other such as the supply voltage U, the electrical resistance $R_{CERAMIC}$, the temperature $T_{CERAMIC}$ and a frequency f of the duty cycle PWM of the supply voltage U. Thus, the matrix may be of the form {f, U, $R_{CERAMIC}$, $T_{CERAMIC}$}. The matrix may be of the form {U, $R_{CERAMIC}$, $T_{CERAMIC}$} if the frequency f is fixed or of the form {f, $R_{CERAMIC}$, $T_{CERAMIC}$} if the supply voltage U is fixed or of the form {$R_{CERAMIC}$, $T_{CERAMIC}$} if the frequency f and the supply voltage U are fixed. The matrix can be determined i.e. calculated by preliminary tests, where the corresponding electrical resistances $R_{CERAMIC}$ and the corresponding temperatures $T_{CERAMIC}$ are calculated i.e. determined and/or read out from known reference works for the deviating possible supply voltages U of the PTC heating element. The matrix can especially be determined during characterization of the PTC heating element. For this purpose, measurements of the output temperature $T_{OUT}$ of the fluid can be made to link the electrical resistances $R_{CERAMIC}$ with the temperature $T_{CERAMIC}$ of the PTC heating element following the reverse equation

$$T_{CERAMIC} = T_{OUT} + 2\frac{P_{EL}}{K \cdot S}.$$

The calculated output temperature $T_{OUT}$ of the fluid can be output to a user in the method. Alternatively or additionally, the calculated output temperature $T_{OUT}$ of the fluid can be compared with a predetermined limit temperature $T_{THRESHOLD}$. When the limit temperature $T_{THRESHOLD}$ is exceeded, the electrical heating power $P_{EL}$ can be reduced and the method can be continued. When the limit temperature $T_{THRESHOLD}$ is not exceeded, the method can be continued without the reducing of the electrical heating power $P_{EL}$. In this way, temperatures in the fluid above the limit temperature $T_{THRESHOLD}$ and thus overheating of the fluid can be prevented.

In the method, the above-mentioned calculation/determination of the relevant quantities - such as the supply voltage U and/or the duty cycle PWM of the supply voltage U and/or the current I and/or the electrical heating power $P_{EL}$ and/or the electrical resistance $R_{CERAMIC}$ and/or the temperature $T_{CERAMIC}$ prevailing at the PTC heating element and/or the output temperature $T_{OUT}$ of the fluid - can be carried out in a control unit. The above-mentioned quantities used for the calculation/determination - such as the characterization constant $K \cdot S$ and/or the matrix {f, U, $R_{CERAMIC}$, $T_{CERAMIC}$} and/or the limit temperature $T_{THRESHOLD}$ - can be stored or pre-stored in the control unit and used as required. The characterization constant $K \cdot S$ and/or the matrix {f, U, $R_{CERAMIC}$, $T_{CERAMIC}$} can be determined i.e. calculated in preliminary tests for the present PTC heater. Known reference works can also be used to determine the matrix {f, U, $R_{CERAMIC}$, $T_{CERAMIC}$}. In particular, the control unit can be an integral part of the PTC heater.

The invention also relates to a PTC heater with at least one PTC heating element. The PTC heater can be flowed through by a fluid and is provided or designed to heat the fluid to the output temperature $T_{OUT}$ by means of the PTC heating element. The PTC heater is thereby provided or designed to carry out the method described above. For carrying out the method, the PTC heater can in particular comprise the control unit described above. To avoid repetition, reference is made at this point to the above explanations.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically

Fig. 1    a sectional view of a PTC heater with a PTC heating element according to the invention;
Fig. 2    a schematic diagram of a method according to the invention.

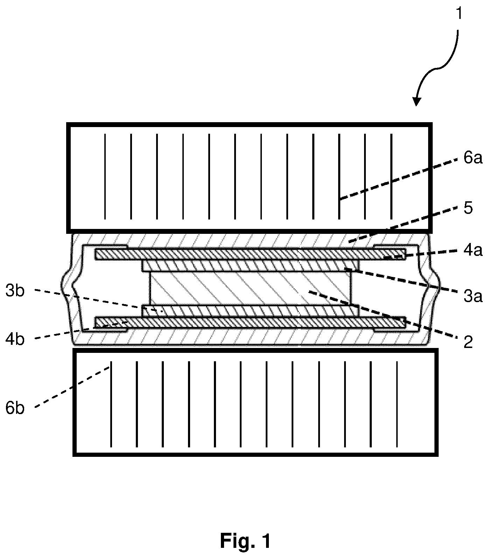

Fig. 1 is a sectional view of a PTC heater 1 according to the invention. The PTC heater 1 comprises a PTC heating element 2 made of a PTC ceramic, two electrical conductive contact plates 3a and 3b, two dielectrical insulating plates 4a and 4b, a housing 5 made of a thermally conductive material such as metal, and two ribs 6a and 6b made of a thermally conductive material such as metal. The PTC heating element 2 is arranged between the contact plates 3a and 3b and is in electrical conductive contact therewith. The insulating plates 4a and 4b are arranged on the contact plates 3a and 3b facing away from the PTC heating element 2. The housing 5 encloses the PTC heating element 2, the contact plates 3a and 3b and the insulating plates 4a and 4b. The insulating plates 4a and 4b are arranged between the housing 5 and the contact plates 3a and 3b and insulate the contact plates 3a and 3b from the housing 5. The ribs 6a and 6b are arranged on the outside of the housing 5. The ribs 6a and 6b are connected to the housing 5 in a heat-transferring manner, and the housing 5 is connected to the PTC heating element 2 in a heat-transferring manner via the insulating plates 4a and 4b and the contact plates 3a and 3b. The PTC heating element 2, the contact plates 3a and 3b, the insulating plates 4a and 4b, the housing 5, and the ribs 6a and 6b are suitably fixed to each other. The PTC heater 1 also contains a control unit for controlling the PTC heating element 2, but the control unit is not shown here.

The control unit of the PTC heater 1 can apply a supply voltage U to the PTC heating element 2 via the contact plates 3a and 3b. The supply voltage U is a DC voltage and can be pulse width modulated with a variable duty cycle PWM. Current I flows then in the PTC heating element 2 and the PTC heating element 2 generates an electrical heating power $P_{EL}$. The PTC heating element 2 heats up to a temperature $T_{CERAMIC}$ depending on the applied supply voltage U i.e. the duty cycle PWM of the supply voltage U. The PTC heating element 2 has an electrical resistance $R_{CERAMIC}$ depending on the temperature $T_{CERAMIC}$ due to its PTC properties. A fluid can flow around the ribs 6a and 6b and can be heated by the PTC heater 1 i.e. the PTC heating element 2 from an input temperature to an output temperature $T_{OUT}$. The PTC heater 1 is characterized by an area S and a factor K. The area S is the heat-transferring surface of the PTC heater 1 flowed around by the fluid, and the factor K is the electrical heating power transferred by the PTC heater 2 to the fluid per surface per Kelvin. The area S and the factor K are constant for the given PTC heater 1.

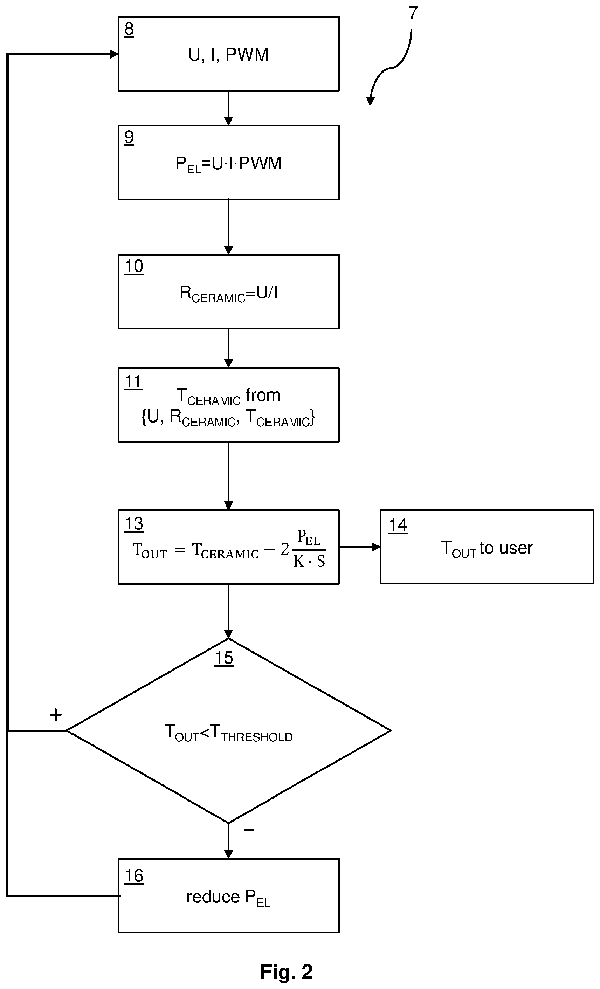

Fig. 2 shows a schematic diagram of a method 7 according to the invention for determining the output temperature $T_{OUT}$ of the fluid after flowing through the PTC heater 1. The method 7 is carried out by the PTC heater 1 for example via the control unit of the PTC heater 1.

In the method 7, the supply voltage U, the current I and the duty cycle PWM of the supply voltage U are determined in a step 8. The supply voltage U and the current I can be measured at the PTC heating element 2. The duty cycle PWM is a controlled variable of the PTC heater 1 and can be read out from the control unit.

Then, in a step 9, the electrical heating power $P_{EL}$ of the PTC heater 1 is calculated using the equation:

$$P_{EL} = U \cdot I \cdot PWM.$$

Then, the temperature $T_{CERAMIC}$ prevailing at the PTC heating element 2 is determined. Thereby, in the step 10, the electrical resistance $R_{CERAMIC}$ of the PTC heating element 2 is calculated using the equation:

$$R_{CERAMIC} = \frac{U}{I}.$$

Subsequently, in a step 11, the temperature $T_{CERAMIC}$ of the PTC heating element 2 is read out from a predetermined matrix {U, $R_{CERAMIC}$, $T_{CERAMIC}$} as a function of the previously measured supply voltage U. The matrix {U, $R_{CERAMIC}$, $T_{CERAMIC}$} is originally of the form {f, U, $R_{CERAMIC}$, $T_{CERAMIC}$}, wherein the frequency f of the duty cycle PWM of the supply voltage U is constant. The matrix {U, $R_{CERAMIC}$, $T_{CERAMIC}$} i.e. {f, U, $R_{CERAMIC}$, $T_{CERAMIC}$} can be determined i.e. calculated in preliminary tests and/or read out from known reference works and can be stored in the control unit of the PTC heater 1.

After determining the temperature $T_{CERAMIC}$ of the PTC heating element 2, in a step 13 the output temperature $T_{OUT}$ of the fluid is calculated using the equation:

$$T_{OUT} = T_{CERAMIC} - 2\frac{P_{EL}}{K \cdot S}.$$

There, a constant characterization constant K·S of the PTC heater 1 is used. The characterization constant K·S is given by a constant area S and a constant factor K. The area S is a heat-transferring surface of the PTC heater 1 flowed around by the fluid. The factor K is an electrical heating power transmitted by the PTC heating element 2 to the fluid per surface per Kelvin. The area S and the factor K can be determined by preliminary tests on the respective PTC heater 1 and stored in the control unit of the PTC heater 1.

Then, the calculated output temperature $T_{OUT}$ of the fluid is output to a user in a step 14 and compared to a limit temperature $T_{THRESHOLD}$ in a step 15. If the output temperature $T_{OUT}$ is greater than the limit temperature $T_{THRESHOLD}$, the heating power $P_{EL}$ is reduced. For this purpose, the duty cycle PWM of the supply voltage U can be reduced up to zero. Then the method 7 is continued with the step 8. If the output temperature $T_{OUT}$ is lower than the limit temperature $T_{THRESHOLD}$, the method 7 is continued with the step 8 without the step 16.

**Claims**

1. Method (7) for determining an output temperature ($T_{OUT}$) of a fluid after flowing through a PTC heater (1) heating the fluid with a PTC heating element (2), wherein in the method:

   - a current (I) of the PTC heating element (2), a supply voltage (U) of the PTC heating element (2) and a duty cycle (PWM) of the supply voltage (U) are determined, and
   - the output temperature ($T_{OUT}$) of the fluid is calculated based on the current (I), the supply voltage (U) and the duty cycle (PWM).

2. Method according to claim 1,
   **characterized**

   - **in that** the output temperature ($T_{OUT}$) of the fluid is calculated independently of an input temperature of the fluid before flowing through a PTC heater (1), and/or
   - **in that** the output temperature ($T_{OUT}$) of the fluid is calculated without a measurement of temperatures prevailing in the PTC heater (1) and/or in the fluid, and/or
   - **in that** the output temperature ($T_{OUT}$) of the fluid is calculated exclusively based on the supply voltage (U), the duty cycle (PWM) of the supply voltage (U) and the current (I) with the addition of a predetermined characterization constant (K·S) of the PTC heater (1).

3. Method according to claim 1 or 2,
   **characterized**
   **in that** the output temperature ($T_{OUT}$) of the fluid is calculated exclusively from an electrical heating power ($P_{EL}$) of the PTC heating element (2), a temperature ($T_{CE-RAMIC}$) prevailing at the PTC heating element (2) and a characterization constant (K·S) of the PTC heater (1).

4. Method according to claim 3,
   **characterized**
   **in that** the electrical heating power ($P_{EL}$) of the PTC heating element (2) is calculated as a product of the supply voltage (U), the duty cycle (PWM) of the supply voltage (U) and the current (I).

5. Method according to claim 3 or 4,
   **characterized**
   **in that**, when calculating the output temperature ($T_{OUT}$) of the fluid, an electrical resistance ($R_{CERAMIC}$) of the PTC heating element (2) is calculated from the supply voltage (U) and the current (I).

6. Method according to any one of claims 3 to 5,
   **characterized**
   **in that**, when calculating the output temperature ($T_{OUT}$) of the fluid, the temperature ($T_{CERAMIC}$) prevailing at the PTC heating element (2) is read out from a predetermined matrix (\{f, U, $R_{CERAMIC}$, $T_{CERAMIC}$\}) depending on the supply voltage (U), the frequency (f) of the duty cycle (PWM) of the supply voltage (U) and the calculated electrical resistance ($R_{CERAMIC}$) of the PTC heating element (2).

7. Method according to any one of claims 3 to 6,
   **characterized**
   **in that** the characterization constant (K·S) of the PTC heater (1) is a product of a heat-transferring area (S) of the PTC heater (1) which is flowed around by the fluid and a factor (K) which indicate an electrical heating power per surface per Kelvin transmitted by the PTC heating element (2) to the fluid.

8. Method according to any one of claims 3 to 7,
   **characterized**

**in that** the output temperature ($T_{OUT}$) of the fluid is calculated as a difference of the temperature ($T_{CERAMIC}$) prevailing at the PTC heating element (2) and a double quotient of the electrical heating power ($P_{EL}$) of the PTC heater (1) by the characterization constant ($K \cdot S$) of the PTC heater (1).

9. Method according to any one of the preceding claims,
**characterized**

- **in that** the output temperature ($T_{OUT}$) of the fluid is compared with a predetermined limit temperature ($T_{THRESHOLD}$), wherein the electrical heating power ($P_{EL}$) is reduced and the method (7) is continued when the limit temperature ($T_{THRESHOLD}$) is exceeded, and wherein the method (7) is continued without the reducing of the electrical heating power ($P_{EL}$) when the limit temperature ($T_{THRESHOLD}$) is not exceeded, and/or
- **in that** the output temperature ($T_{OUT}$) of the fluid is output to a user.

10. PTC heater (1) with a PTC heating element (2), wherein the PTC heater (1) can be flowed through by a fluid and is provided for heating the fluid to an output temperature ($T_{OUT}$), **characterized in that** the PTC heater (1) is provided for carrying out the method (7) according to one of the preceding claims.

**Patentansprüche**

1. Verfahren (7) zur Bestimmung einer Austrittstemperatur ($T_{OUT}$) eines Fluids nach Durchströmen durch eine PTC-Heizvorrichtung (1), die das Fluid mit einem PTC-Heizelement (2) erhitzt, wobei bei dem Verfahren:

- ein Strom (I) des PTC-Heizelements (2), eine Versorgungsspannung (U) des PTC-Heizelements (2) und ein Arbeitszyklus (PWM) der Versorgungsspannung (U) bestimmt werden, und
- die Austrittstemperatur ($T_{OUT}$) des Fluids basierend auf dem Strom (I), der Versorgungsspannung (U) und dem Arbeitszyklus (PWM) berechnet wird.

2. Verfahren nach Anspruch 1,
**dadurch gekennzeichnet,**

- **dass** die Austrittstemperatur ($T_{OUT}$) des Fluids unabhängig von einer Eintrittstemperatur des Fluids vor Durchströmen durch eine PTC-Heizvorrichtung (1) berechnet wird, und/oder
- **dass** die Austrittstemperatur ($T_{OUT}$) des Fluids ohne Messung von in der PTC-Heizvorrichtung (1) und/oder im Fluid herrschenden Temperaturen berechnet wird, und/oder
- **dass** die Austrittstemperatur ($T_{OUT}$) des Fluids ausschließlich basierend auf der Versorgungsspannung (U), dem Arbeitszyklus (PWM) der Versorgungsspannung (U) und des Stroms (I) zuzüglich einer vorbestimmten Charakterisierungskonstante ($K \cdot S$) der PTC-Heizvorrichtung (1) berechnet wird.

3. Verfahren nach Anspruch 1 oder 2,
**dadurch gekennzeichnet,**
**dass** die Austrittstemperatur ($T_{OUT}$) des Fluids ausschließlich aus einer elektrischen Heizleistung ($P_{EL}$) des PTC-Heizelements (2), der am PTC-Heizelement (2) herrschenden Temperatur ($T_{CERAMIC}$) und einer Charakterisierungs-konstante ($K \cdot S$) des PTC-Heizelements (1) berechnet wird.

4. Verfahren nach Anspruch 3,
**dadurch gekennzeichnet,**
**dass** die elektrische Heizleistung ($P_{EL}$) des PTC-Heizelements (2) als Produkt aus der Versorgungsspannung (U), dem Arbeitszyklus (PWM) der Versorgungsspannung (U) und der Stromstärke (I) berechnet wird.

5. Verfahren nach Anspruch 3 oder 4,
**dadurch gekennzeichnet,**
**dass** bei Berechnen der Austrittstemperatur ($T_{OUT}$) des Fluids der elektrische Widerstand ($R_{CERAMIC}$) des PTC-Heizelements (2) aus der Versorgungsspannung (U) und dem Strom (I) berechnet wird.

6. Verfahren nach einem der Ansprüche 3 bis 5,
**dadurch gekennzeichnet,**
**dass** bei Berechnen der Austrittstemperatur ($T_{OUT}$) des Fluids die am PTC-Heizelement (2) herrschende

Temperatur ($T_{CERAMIC}$) aus einer vorbestimmten Matrix ({f, U, $R_{Keramik}$, $T_{Keramik}$}) ausgelesen wird, die von der Versorgungsspannung (U), der Frequenz (f) des Arbeitszyklus (PWM) der Versorgungsspannung (U) und dem berechneten elektrischen Widerstand ($R_{CERAMIC}$) des PTC-Heizelements (2) abhängig ist.

7.  Verfahren nach einem der Ansprüche 3 bis 6,
    **dadurch gekennzeichnet,**
    **dass** die Charakterisierungskonstante (K·S) der PTC-Heizvorrichtung (1) ein Produkt ist aus der Wärmeübertragungsfläche (S) der PTC-Heizvorrichtung (1), die vom Fluid umströmt wird, und einem Faktor (K), der eine elektrische Heizleistung pro Fläche und Kelvin angibt, die vom PTC-Heizelement (2) an das Fluid übertragen wird.

8.  Verfahren nach einem der Ansprüche 3 bis 7,
    **dadurch gekennzeichnet,**
    **dass** die Austrittstemperatur ($T_{OUT}$) des Fluids als Differenz der am PTC-Heizelement (2) herrschenden Temperatur ($T_{CERAMIC}$) und einem doppelten Quotienten der elektrischen Heizleistung ($P_{EL}$) der PTC-Heizvorrichtung (1) durch die Charakterisierungskonstante (K·S) der PTC-Heizvorrichtung (1) berechnet wird.

9.  Verfahren nach einem der vorstehenden Ansprüche,
    **dadurch gekennzeichnet,**

    - **dass** die Austrittstemperatur ($T_{OUT}$) des Fluids mit einer vorbestimmten Grenztemperatur ($T_{THRESHOLD}$) verglichen wird, wobei die elektrische Heizleistung ($P_{EL}$) reduziert und das Verfahren (7) fortgesetzt wird, wenn die Grenztemperatur ($T_{THRESHOLD}$) überschritten ist, und wobei das Verfahren (7) ohne Reduzieren der elektrischen Heizleistung ($P_{EL}$) fortgesetzt wird, wenn die Grenztemperatur ($T_{THRESHOLD}$) nicht überschritten ist, und/oder
    - **dass** die Austrittstemperatur ($T_{OUT}$) des Fluids an einen Benutzer ausgegeben wird.

10. PTC-Heizvorrichtung (1) mit einem PTC-Heizelement (2), wobei die PTC-Heizvorrichtung (1) von einem Fluid durchströmt werden kann und zum Erhitzen des Fluids auf eine Austrittstemperatur ($T_{OUT}$) bereitgestellt ist, **dadurch gekennzeichnet, dass** die PTC-Heizvorrichtung (1) zum Ausführen des Verfahrens (7) nach einem der vorstehenden Ansprüche bereitgestellt ist.

**Revendications**

1.  Procédé (7) de détermination d'une température de sortie ($T_{OUT}$) d'un fluide après passage à travers un chauffage CTP (1) chauffant le fluide avec un élément chauffant CTP (2), dans lequel dans le procédé :

    - un courant (I) de l'élément chauffant CTP (2), une tension d'alimentation (U) de l'élément chauffant CTP (2) et un rapport cyclique (PWM) de la tension d'alimentation (U) sont déterminés, et
    - la température de sortie ($T_{OUT}$) du fluide est calculée en fonction du courant (I), de la tension d'alimentation (U) et du rapport cyclique (PWM).

2.  Procédé selon la revendication 1,
    **caractérisé**

    - **en ce que** la température de sortie ($T_{OUT}$) du fluide est calculée indépendamment d'une température d'entrée du fluide avant de passer à travers un chauffage CTP (1), et/ou
    - dans lequel la température de sortie ($T_{OUT}$) du fluide est calculée sans mesure des températures prévalant dans le chauffage CTP (1) et/ou dans le fluide, et/ou
    - dans lequel la température de sortie ($T_{OUT}$) du fluide est calculée exclusivement sur la base de la tension d'alimentation (U), du rapport cyclique (PWM) de la tension d'alimentation (U) et du courant (I) avec l'ajout d'une constante de caractérisation prédéterminée (K·S) du chauffage CTP (1).

3.  Procédé selon la revendication 1 ou 2,
    **caractérisé**
    **en ce que** la température de sortie ($T_{OUT}$) du fluide est calculée exclusivement à partir d'une puissance de chauffage électrique ($P_{EL}$) de l'élément chauffant CTP (2), d'une température ($T_{CERAMIC}$) prévalant au niveau de l'élément chauffant CTP (2) et d'une constante de caractérisation (K·S) du chauffage CTP (1).

**4.** Procédé selon la revendication 3,
**caractérisé**
**en ce que** la puissance de chauffage électrique ($P_{EL}$) de l'élément chauffant CTP (2) est calculée comme un produit de la tension d'alimentation (U), du rapport cyclique (PWM) de la tension d'alimentation (U) et du courant (I).

**5.** Procédé selon la revendication 3 ou 4,
**caractérisé**
**en ce que** lors du calcul de la température de sortie ($T_{OUT}$) du fluide, une résistance électrique ($R_{CERAMIC}$) de l'élément chauffant CTP (2) est calculée à partir de la tension d'alimentation (U) et du courant (I).

**6.** Procédé selon l'une quelconque des revendications 3 à 5,
**caractérisé**
**en ce que** lors du calcul de la température de sortie ($T_{OUT}$) du fluide, la température ($T_{CERAMIC}$) prévalant au niveau de l'élément chauffant CTP (2) est lue à partir d'une matrice prédéterminée ($\{f, U, R_{CERAMIC}, T_{CERAMIC}\}$) en fonction de la tension d'alimentation (U), de la fréquence (f) du rapport cyclique (PWM) de la tension d'alimentation (U) et de la résistance électrique calculée ($R_{CERAMIC}$) de l'élément chauffant CTP (2).

**7.** Procédé selon l'une quelconque des revendications 3 à 6,
**caractérisé**
**en ce que** la constante de caractérisation (K·S) du chauffage CTP (1) est un produit d'une surface de transfert de chaleur (S) du chauffage CTP (1) autour de laquelle circule le fluide et d'un facteur (K) qui indique une puissance de chauffage électrique par surface par Kelvin transmise par l'élément chauffant CTP (2) au fluide.

**8.** Procédé selon l'une quelconque des revendications 3 à 7,
**caractérisé**
**en ce que** la température de sortie ($T_{OUT}$) du fluide est calculée comme une différence entre la température ($T_{CERAMIC}$) prévalant au niveau de l'élément chauffant CTP (2) et un double quotient de la puissance de chauffage électrique ($P_{EL}$) du chauffage CTP (1) par la constante de caractérisation (K·S) du chauffage CTP (1).

**9.** Procédé selon l'une quelconque des revendications précédentes,
**caractérisé**

- **en ce que** la température de sortie ($T_{OUT}$) du fluide est comparée à une température limite prédéterminée ($T_{THRESHOLD}$), dans lequel la puissance de chauffage électrique ($P_{EL}$) est réduite et le procédé (7) se poursuit lorsque la température limite ($T_{THRESHOLD}$) est dépassée, et dans lequel le procédé (7) se poursuit sans réduction de la puissance de chauffage électrique ($P_{EL}$) lorsque la température limite ($T_{THRESHOLD}$) n'est pas dépassée, et/ou
- **en ce que** la température de sortie ($T_{OUT}$) du fluide est communiquée à un utilisateur.

**10.** Elément chauffant CTP (1) avec un élément chauffant CTP (2), dans lequel le chauffage CTP (1) peut être traversé par un fluide et est prévu pour chauffer le fluide à une température de sortie ($T_{OUT}$), **caractérisé en ce que** le chauffage CTP (1) est prévu pour mettre en œuvre le procédé (7) selon l'une des revendications précédentes.

**Fig. 1**

**Fig. 2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3672360 A1
- US 2011038394 A